# EUROPEAN PATENT APPLICATION

(11) **EP 3 156 218 A1**
(43) Date of publication of application: **19.04.2017**
(21) Application number: 16193450.0
(22) Date of filing: 12.10.2016
(51) Int. Cl.: B29C 73/34, B29C 73/10, B29C 65/18, B29C 65/00

(54) **RAPID PATCH REPAIR OF SIDEWALL PANEL**

(30) Priority: 12.10.2015 US 201562240366 P
(71) Applicant: C&D Zodiac, Inc., Huntington Beach, CA 92647 (US)
(72) Inventor: DEL PINTO, James, Huntington Beach, California 92647 (US)
(74) Representative: McGlashan, Graham Stewart

(57) **Abstract**

A method of repairing a thermoplastic panel (10) having a damaged portion (12) therein that includes the steps of obtaining a patch member (14) made of a thermoplastic material, positioning the patch member (14) over the damaged portion (12), positioning the panel (10) and patch member (14) on a heat sink tool (16), using a hot forming tool (18) to soften the panel (10) and the patch member (14) such that the material of the panel (10) and the material of the patch member (14) are welded together, and cooling the panel (10) and patch member (14) to integrally bond the patch member (14) to the panel (10), thereby forming a panel (10) and patch assembly.

## Description

### CROSS-REFERENCE TO RELATED APPLICATIONS

This application claims the benefit of U.S. Provisional Application No. 62/240,366, filed October 12, 2015, which is herein incorporated by reference in its entirety.

### FIELD OF THE INVENTION

The present invention relates to a system and method for repairing aircraft sidewall or other panels.

### BACKGROUND OF THE INVENTION

Typically, repairs on aircraft sidewalls are accomplished using wet lay-up or bonding of fiberglass to the exterior of the panel. Processes such as vacuum bag and local press are often used. The method described herein preferably provides a much faster result and a quicker turn-around for the operator (e.g., airline).

### SUMMARY OF THE PREFERRED EMBODIMENTS

In accordance with a first aspect of the present invention there is provided a method of repairing a thermoplastic panel having a damaged portion therein that includes the steps of obtaining a patch member made of a thermoplastic material, positioning the patch member over the damaged portion, positioning the panel and patch member on a heat sink tool, using a hot forming tool to soften the panel and the patch member such that the material of the panel and the material of the patch member are welded together, and cooling the panel and patch member to integrally bond the patch member to the panel, thereby forming a panel and patch assembly. In a preferred embodiment, the thermoplastic material of at least a portion of the patch member and at least a portion of the panel is raised to a temperature above its glass transition temperature. Preferably, the thermoplastic material of at least a portion of the patch member and at least a portion of the panel are raised to a temperature between about 450°F and about 800°F and more preferably between about 600°F and about 750°F.

In a preferred embodiment, the method includes obtaining an adhesive film comprised of nylon, fiberglass or carbon fiber, positioning the adhesive film between the patch member and the panel, positioning the panel, patch member and adhesive film on a heat sink tool, using the hot forming tool to soften the panel, the patch member and the adhesive film such that the material of the panel, the material of the patch member, and the material of the adhesive film are welded together, and cooling the panel, patch member and adhesive film to integrally bond the patch member to the panel, thereby forming the panel and patch assembly. Preferably, the panel is an aircraft sidewall panel or ceiling panel. In a preferred embodiment, the forming tool has a heated bottom surface, and the method further includes placing the heated bottom surface on an upper surface of the patch member and an upper surface of the panel.

In accordance with another aspect of the invention there is provided a method of repairing a thermoplastic panel having a damaged portion therein. The damaged portion is defined by a first edge and a second edge, and the method includes positioning the panel on a heat sink tool, using a hot forming tool to soften the thermoplastic material of the panel adjacent the damaged portion such that the material of the first edge and the material of the second edge are welded together, and cooling the panel to integrally bond the first edge to the second edge. Preferably, the hot forming tool has a heated bottom surface, and the method includes placing the heated bottom surface on an upper surface an upper surface of the panel and over the first and second edges.

The present invention provides rapid repair of a thermoplastic aircraft panels (e.g., side panels) using patch materials and thermoforming techniques. The liner thermoformable panel can be made of short and/or medium length fibers (e.g,. fiberglass or carbon) and a matrix comprised of a thermoplastic resin, such as polyetherimide (PEI), polyphenylsulphone (PPSU), polyphenylene sulfide (PPS), polyoxymethylene/acetal (POM), acrylic (PMMA), fluoropolymers (PTFE, FEP, PVF), ketone-based systems (PEK, PEEK, PEKK), polyimide, polycarbonate (PC), polyethylene (PE), polyphenyleneether (PPE), polyphthalamide (PPA), polypropylene (PP), styrenic systems (ABS, PS, etc.), other sulfone based systems (PES, PSU), urethane and polyurethane (PUR, TPU, etc.), vinyl based systems (PVC, CPVC, etc.) and polyarylamide (PAA) and possibly a binder resin. In a preferred embodiment, the repairs are affected using a heat sink tool (e.g., an anvil) and a hot forming tool (e.g., an iron) to soften the surface of the panel, thus allowing it to be reformed. The repair can utilize small patch sections of the parent lining material or fiberglass and nylon film adhesive to "iron" the reinforcement into the panel. As the panel is cooled, the patch becomes integrally bonded to the surface.

In use, a patch is placed over the damaged area and a hot tool (similar to a household iron) is used to bond the patch directly to the panel skin. See U.S. Patent Publication Nos. 2009/0072086 and 2011/0108667, and U.S. Patent App. 9,358,703, the entireties of which are incorporated by reference herein, for a discussion of thermoplastic panels.

The invention, together with additional features and advantages thereof, may be best understood by reference to the following description.

### BRIEF DESCRIPTION OF THE DRAWINGS

FIG. 1 is an illustration of a series of steps for repairing an aircraft sidewall panel with a patch in accordance with a preferred embodiment of the present invention; and
FIG. 2 is an illustration of a series of steps for repairing an aircraft sidewall panel in accordance with another preferred embodiment of the present invention.

Like numerals refer to like parts throughout the several views of the drawings.

### DETAILED DESCRIPTION OF THE PREFERRED EMBODIMENTS

The following description and drawings are illustrative and are not to be construed as limiting. Numerous specific details are described to provide a thorough understanding of the disclosure. However, in certain instances, well-known or conventional details are not described in order to avoid obscuring the description. References to one or an embodiment in the present disclosure can be, but not necessarily are references to the same embodiment; and, such references mean at least one of the embodiments.

Reference in this specification to "one embodiment" or "an embodiment" means that a particular feature, structure, or characteristic described in connection with the embodiment is included in at least one embodiment of the-disclosure. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not other embodiments.

The terms used in this specification generally have their ordinary meanings in the art, within the context of the disclosure, and in the specific context where each term is used. Certain terms that are used to describe the disclosure are discussed below, or elsewhere in the specification, to provide additional guidance to the practitioner regarding the description of the disclosure. For convenience, certain terms may be highlighted, for example using italics and/or quotation marks: The use of highlighting has no influence on the scope and meaning of a term; the scope and meaning of a term is the same, in the same context, whether or not it is highlighted. It will be appreciated that the same thing can be said in more than one way.

Consequently, alternative language and synonyms may be used for any one or more of the terms discussed herein. Nor is any special significance to be placed upon whether or not a term is elaborated or discussed herein. Synonyms for certain terms are provided. A recital of one or more synonyms does not exclude the use of other synonyms. The use of examples anywhere in this specification including examples of any terms discussed herein is illustrative only, and is not intended to further limit the scope and meaning of the disclosure or of any exemplified term. Likewise, the disclosure is not limited to various embodiments given in this specification.

Without intent to further limit the scope of the disclosure, examples of instruments, apparatus, methods and their related results according to the embodiments of the present disclosure are given below. Note that titles or subtitles may be used in the examples for convenience of a reader, which in no way should limit the scope of the disclosure. Unless otherwise defined, all technical and scientific terms used herein have the same meaning as commonly understood by one of ordinary skill in the art to which this disclosure pertains. In the case of conflict, the present document, including definitions, will control.

It will be appreciated that terms such as "front," "back," "upper," "lower," "side," "short," "long," "up," "down," and "below" used herein are merely for ease of description and refer to the orientation of the components as shown in the figures. It should be understood that any orientation of the components described herein is within the scope of the present invention.

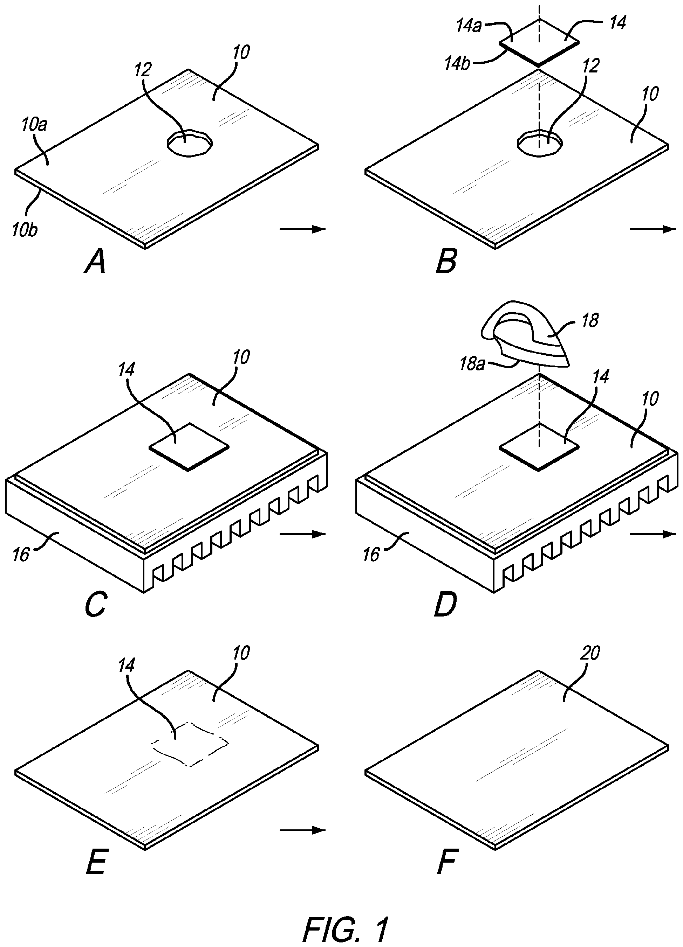

Referring now to the drawings, which are for purposes of illustrating the present invention and not for purposes of limiting the same, FIG. 1 shows a series of steps for repairing a panel 10 that comprises a thermoplastic. As described herein, the panel is intended to be used in an aircraft (e.g., side panel, ceiling panel, etc.). However, this is not a limitation on the present invention and the panel can be used elsewhere.

The present invention provides rapid repair of a thermoplastic aircraft panels (e.g., side panels) using a patch material and thermoforming techniques. As discussed above, a liner thermoformable panel 10 is typically made of short and/or medium length fibers (e.g,. fiberglass, carbon fiber, basalt fiber, quartz or partially oxidized polyactrynitrile (PAN)) and a matrix comprised of a thermoplastic resin (see the exemplary list above) and possibly a binder resin. Any thermoplastic material is within the scope of the present invention.

The steps shown in FIG. 1 are only exemplary. It will be understood that the steps may be performed in a different order or some of the steps may be omitted. Step A shows a panel 10 with a damaged portion 12 therein. The panel 10 includes first and second surfaces 10a and 10b (also referred to as upper and lower surfaces) The damaged portion 12 can be a hole, rip, tear, puncture or the like. The damage portion 12 may affect some of the layers of the panel 10 or may be an opening or hole that extends all the way therethrough. In step B, a patch member 14 sized to cover the damaged portion 12 is obtained or provided. In a preferred embodiment, the patch member 14 comprises a thermoplastic that is the same or similar to the material of the panel 10. The patch member 14 includes first and second surfaces 14a and 14b (also referred to as upper and lower surfaces). In step C, the panel 10, with the patch member 14 covering the damaged portion 12 is placed on a heat sink tool 16. The heat sink tool 16 may be an anvil or any other support or surface. The second surface 14b of the patch member 14 is placed on the first surface 10a of the panel 10 and the second surface 10b of the panel 10 is placed on the heat sink tool 16. The panel 10 may have a larger surface area than the heat sink tool 16. In such a case, the area of the second surface 10b of the panel 10 that surrounds the damaged portion 12 is placed on the upper surface of the heat sink tool 16.

In step D a hot forming tool 18 (which includes a heated bottom surface 18a) is placed on the first surface 14a of the patch member 14 and the first surface 10a of the panel 10 to raise the temperature of the patch member 14 and panel 10 to within a predetermined range to soften the surface of the panel 10 and the patch member 14, thus allowing it to be reformed. The temperature range is preferably between about 450°F and about 800°F and more preferably between about 600°F and about 750°F. It will be appreciated by those of ordinary skill in the art that the temperature of the materials must be raised above their glass transition temperature so that the material of the patch member 14 can weld to or be welded with the material of the panel 10. However, preferably materials are not raised to a temperature above their melting point. Although, in some cases this may occur. The repair can utilize multiple patch members 14 if necessary to cover a single or multiple damaged portions 12. If desired, fiberglass, nylon or carbon film adhesives can be used to help affect the repair. In this situation, an adhesive film would be positioned between the patch member 14 and the upper surface of the panel 10 prior to heating the materials (e.g., at step B). The adhesive film can be about the same size as the patch member 14 or can only be applied to the portion of the panel outside of the damaged portion 12. In this embodiment, when the material of the patch member 14 and the panel 10 is heated, the material of the adhesive film is also heated so that it is raised above its glass transition temperature to help weld the patch member, panel and adhesive film together.

Step E shows the patch member 14 and the panel 10 beginning to cool, and showing the material of the patch member 14 welding to, reforming with or joining the material of the panel 10. Step F shows the repaired panel 20 (also referred to herein as a panel and patch assembly) after it has completely cooled.

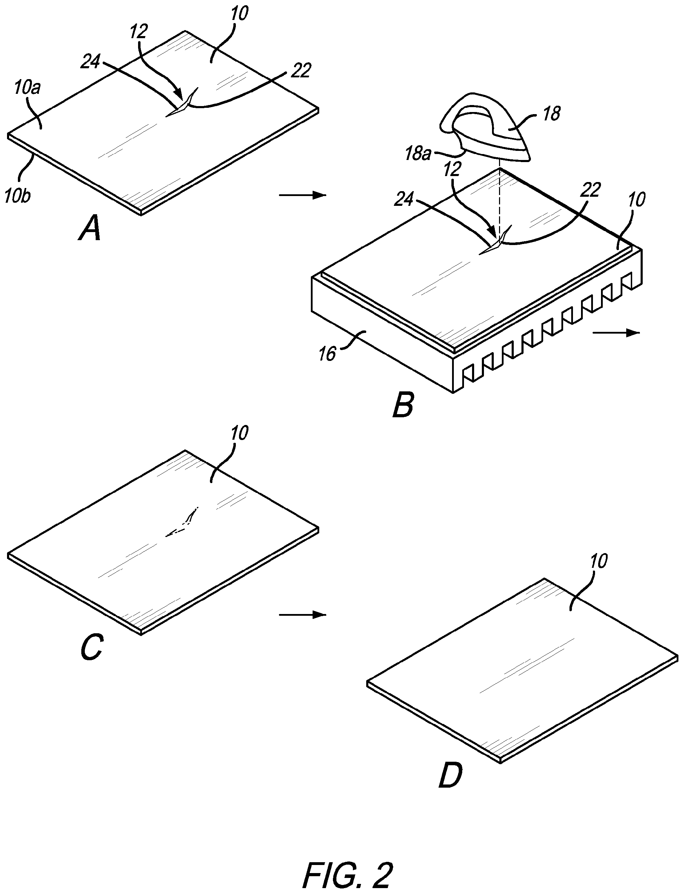

FIG. 2 shows a situation where the panel 10 has only a small tear or crack therein. In this embodiment, the patch member can be omitted. As shown in FIG. 2, the crack or damaged portion 12 includes first and second opposing edges 22 and 24. In this embodiment, the hot forming tool 18 is placed on the first surface 10a of the panel 10 and over the damaged portion 12 to raise the temperature of the panel 10 to within the predetermined range to soften the surface of the panel 10, thus allowing it to be reformed and to weld the inner surfaces 22 and 24 of the damage portion (e.g., crack) back together.

It will be appreciated by those of ordinary skill in the art that changes, omissions or additions can be made to the above described method in process. For example, patch members can be placed on the first and second surfaces of the panel and then reformed therewith. A single large patch member can be used to repair a plurality of damaged portions. Multiple patch members can be used to repair a single damaged portion. Furthermore, the present invention includes a panel assembly created by the process and method described herein.

Unless the context clearly requires otherwise, throughout the description and the claims, the words "comprise," "comprising," and the like are to be construed in an inclusive sense, as opposed to an exclusive or exhaustive sense; that is to say, in the sense of "including, but not limited to." As used herein, the terms "connected," "coupled," or any variant thereof, means any connection or coupling, either direct or indirect, between two or more elements; the coupling of connection between the elements can be physical, logical, or a combination thereof. Additionally, the words "herein," "above," "below," and words of similar import, when used in this application, shall refer to this application as a whole and not to any particular portions of this application. Where the context permits, words in the above Detailed Description of the Preferred Embodiments using the singular or plural number may also include the plural or singular number respectively. The word "or" in reference to a list of two or more items, covers all of the following interpretations of the word: any of the items in the list, all of the items in the list, and any combination of the items in the list.

The above-detailed description of embodiments of the disclosure is not intended to be exhaustive or to limit the teachings to the precise form disclosed above. While specific embodiments of and examples for the disclosure are described above for illustrative purposes, various equivalent modifications are possible within the scope of the disclosure, as those skilled in the relevant art will recognize. Further any specific numbers noted herein are only examples: alternative implementations may employ differing values or ranges.

Any patents and applications and other references noted above, including any that may be listed in accompanying filing papers, are incorporated herein by reference in their entirety. Aspects of the disclosure can be modified, if necessary, to employ the systems, functions, and concepts of the various references described above to provide yet further embodiments of the disclosure.

Accordingly, although exemplary embodiments of the invention have been shown and described, it is to be understood that all the terms used herein are descriptive rather than limiting, and that many changes, modifications, and substitutions may be made by one having ordinary skill in the art without departing from the spirit and scope of the invention.

## Claims

1. A method of repairing a thermoplastic panel having a damaged portion therein, the method comprising the steps of:
a. obtaining a patch member comprised of a thermoplastic material,
b. positioning the patch member over the damaged portion,
c. positioning the panel and patch member on a heat sink tool,
d. using a hot forming tool to soften the panel and the patch member such that the material of the panel and the material of the patch member are welded together, and
e. cooling the panel and patch member to integrally bond the patch member to the panel, thereby forming a panel and patch assembly.

2. The method of claim 1 wherein in step d, the thermoplastic material of at least a portion of the patch member and at least a portion of the panel is raised to a temperature above its glass transition temperature.

3. The method of claim 1 or claim 2, wherein in step d, the thermoplastic material of at least a portion of the patch member and at least a portion of the panel is raised to a temperature between about 450°F and about 800°F.

4. The method of any preceding claim, wherein in step d, the thermoplastic material of at least a portion of the patch member and at least a portion of the panel is raised to a temperature between about 600°F and about 750°F.

5. The method of any preceding claim, further comprising the steps of:
obtaining an adhesive film comprised of nylon, fiberglass or carbon fiber, and
positioning the adhesive film between the patch member and the panel,
positioning the panel, patch member and adhesive film on a heat sink tool,
using the hot forming tool to soften the panel, the patch member and the adhesive film such that the material of the panel, the material of the patch member, and the material of the adhesive film are welded together; and
e. cooling the panel, patch member and adhesive film to integrally bond the patch member to the panel, thereby forming the panel and patch assembly.

6. The method of any preceding claim, wherein the panel is an aircraft sidewall panel or ceiling panel.

7. The method of any preceding claim, wherein in step d the hot forming tool has a heated bottom surface, and wherein the method further comprises placing the heated bottom surface on an upper surface of the patch member and an upper surface of the panel.

8. A method of repairing a thermoplastic panel having a damaged portion therein, wherein the damaged portion is defined by a first edge and a second edge, the method comprising the steps of:
positioning the panel on a heat sink tool,
using a hot forming tool to soften the thermoplastic material of the panel adjacent the damaged portion such that the material of the first edge and the material of the second edge are welded together, and
cooling the panel to integrally bond the first edge to the second edge.

9. The method of any preceding claim, wherein the hot forming tool has a heated bottom surface, and wherein the method further comprises placing the heated bottom surface on an upper surface an upper surface of the panel and over the first and second edges.
